(19) Europäisches Patentamt
European Patent Office
Office européen des brevets

(11) Veröffentlichungsnummer: **0 109 097 B2**

(12) **NEUE EUROPÄISCHE PATENTSCHRIFT**

(45) Veröffentlichungstag der neuen Patentschrift:
**23.10.91 Patentblatt 91/43**

(51) Int. Cl.$^5$: **F28F 27/02, F24D 3/00**

(21) Anmeldenummer: **83200728.0**

(22) Anmeldetag: **25.05.83**

(54) **Plattenförmiger Wärmetauscher.**

(30) Priorität: **12.11.82 DE 3241842**

(43) Veröffentlichungstag der Anmeldung:
**23.05.84 Patentblatt 84/21**

(45) Bekanntmachung des Hinweises auf die
Patenterteilung:
**14.08.85 Patentblatt 85/33**

(45) Bekanntmachung des Hinweises auf die
Entscheidung über den Einspruch:
**23.10.91 Patentblatt 91/43**

(84) Benannte Vertragsstaaten:
**AT BE CH DE FR GB IT LI LU NL SE**

(56) Entgegenhaltungen:
DE-A- 1 551 479
DE-A- 2 009 547
DE-A- 2 161 604
DE-A- 2 364 598
DE-A- 2 607 183
DE-A- 3 103 071

(56) Entgegenhaltungen:
DE-B- 1 074 247
DE-C- 322 789
DE-C- 401 506
DE-C- 633 361
DE-C- 647 207
DE-C- 2 500 146
FR-A- 737 521
FR-A- 1 396 037
FR-A- 2 194 927
FR-A- 2 349 811
GB-A- 413 947
US-A- 2 903 190
US-A- 3 357 485
US-A- 3 374 832
US-A- 3 416 598
US-A- 3 449 212

(73) Patentinhaber: **REHAU AG + Co**
**Rheniumhaus**
**W-8673 Rehau (DE)**

(72) Erfinder: **Wissmath, Siegfried**
**Henry-Dunant-Strasse 1**
**W-8673 Rehau (DE)**

EP 0 109 097 B2

## Beschreibung

Die Erfindung betrifft einen plattenförmigen Wärmetauscher mit einer Vielzahl von gegeneinander durch längsverlaufende Stege getrennten Fließkanälen für das Übertragungsmedium und an den freien Enden angeordneten Sammelleitungen, in die die einzelnen Fließkanäle münden, wobei in den Sammelleitungen Anschlüsse für Zufluß- und Abflußleitungen angeordnet sind.

Es sind plattenförmige Wärmetauscher bekannt, die aus zwei plattenförmigen Gelbilden bestehen, welche durch beliebig viele parallele Wände miteinander verbunden sind. Auf diese Weise werden eine Vielzahl parallel verlaufender Fließkanäle für das Übertragungsmedium gebildet.

Die bekannten plattenförmigen Wärmetauscher können an den freien Enden zur Bildung einer Einführungs- bzw. Ausführungsöffnung für das Übertragungsmedium miteinander verbunden sein. Dazu können die Querstege zwischen den beiden Platten auf entsprechende Länge ausgeschnitten oder weggelassen und die Enden der beiden Platten durch Wärme und Druck und ggf. Zwischenschaltung von Haftvermittlern dicht miteinander verbunden werden.

Die bekannten plattenförmigen Wärmetauscher sind zwar geeignet, das Übertragungsmedium -z.B. Warmwasser - zu transportieren und durch die Fließkanäle zu leiten. Es besteht jedoch hierbei der Nachteil, daß im Bereich der gezielten Anströmung das Übertragungsmedium relativ schnell den oder die zugeordneten Fließkanäle durcheilt, während die perifer angeordneten Fließkanäle erst zögernd mit dem Übertragungsmedium beaufschlagt werden und dadurch ein Nacheilen des Mediums in diesen Kanälen stattfindet, was auf die einheitliche Wärmeübertragung nachteiligen Einfluß hat. Dies kommt insbesondere dort als nachteilig zum Ausdruck, wo die bekannten plattenförmigen Wärmetauscher als Fußboden-, Wand- oder Deckenheizungen eingesetzt werden. Man hat sich dadurch zu helfen versucht, daß man über die gesamte Breite der Wärmetauscherplatte einseitig oder beidseitig ein Verteilerrohr angesetzt hat, in welches die einzelnen Fließkanäle münden. Dieses Verteilerrohr kann einerseits einen zentralen Einlaß und andererseits einen zentralen Auslaß besitzen, was bei einem Aufbau zweckmäßig sein kann, bei dem die Einführung des Übertragungsmediums auf der einen Plattenseite und die Ausführung auf der anderen Plattenseite erfolgt. Es sind jedoch auch Aufbauten denkbar, bei denen die Einführung und die Ausführung des Übertragungsmediums nur an einer Querseite des Wärmetauschers erfolgt. In diesen Fällen erfolgt die Umlenkung des Übertragungsmediums innerhalb des Wärmetauschers, an dam der Einführung des Übertragungsmediums entgegengesetzten Querende derart, daß in die Wärmetauscherplatte längsverlaufend etwa mittig ein Sperresteg eingelassen ist, der das einseitig angeordnete Verteilerrohr in einen Zulaufteil und einen Ablaufteil trennt und am gegenüberliegenden Ende der Wärmertauscherplatte durch sein zurückversetztes Ende einen Übertritt des Übertragungsmediums von der Vorlaufplattenseite zur Rücklaufplattenseite ermöglicht.

Da eine zentrale Anströmung bekannt ist, bestehen auch hier die als nachteilig bekannten Merkmale des Voreilens des Mediums in den mehr oder weniger direkt angeströmten Fließkanälen und des Nacheilens in den periferen Kanälen.

Man hat versucht, diesen Nachteil dadurch abzustellen, daß den Fließkanälen verschiedene Querschnittsabmessungen gegegeben werden. Diese Maßnahme läßt eine gewisse Reduzierung der oben geschilderten Ungleichheit des Strömungsverhaltens in den einzelnen Fließkanälen zu, schafft auf der anderen Seite jedoch Probleme bei der Druckbelastung der Wärmetauscherplatte. Hierbei ist zu beachten, daß die Wärmetauscherplatte bei der Verwendung als Fußbodenheizung beträchtliche Auflagerkräfte aufnehmen muß, ohne eine wesentliche Verringerung des Durchflußquerschnittes der einzelnen Fließkanäle zu erleiden. Gerade dieser Nachteil tritt jedoch dann ein, wenn beispielsweise von der Plattenmitte zur Plattenperipherie hin die Querschnittsabmessungen der Fließkanäle zunehmen, wobei hier eine zentrale Anströmung vorausgesetzt ist. Eine solche Platte würde in ihrem periferen Bereich weniger widerstandsfähig gegen Auflagerkräfte sein, als in ihrem mittleren Bereich. Derartige Unterschiede sind jedoch bei dem beabsichtigten Verwendungszweck nicht tragbar.

Hier setzt die Erfindung ein, die es sich zur Aufgabe gestellt hat, einen plattenförmigen Wärmetauscher anzugeben, der an der Mitte wie an der Periferie mit Fließkanälen gleichen Querschnitts ausgestattet ist, ohne daß das als nachteilig erkannte Problem des Voreilens des Übertragungsmediums im Anströmbereich zum Tragen kommt. Erfindungsgemäß wird hierzu vorgeschlagen, daß die Anschlüsse für die Zuflußleitungen als Flachdüsen mit einem rohrförmigen Anschlußstück ausgebildet sind, welches Anschlußstück mit seinem lichten Querschnitt in den als Verteilerkanal ausgebildeten lichten Innenraum der Flachdüse mündet, welcher lichte Innenraum von einem ebenen oberen Deckteil sowie einem bauchig nach unten verlaufenden Bodenteil gebildet ist, dessen freie Enden nach oben zum Deckteil hingezogen und mit dessen freien Enden dicht verbunden sind, daß der lichte Innenraum der Flachdüse von der Strömungsöffnung mittig zum rohrförmigen Anschlußstück verlaufend eine als Strömungsverteiler wirkende Einschnürung aufweist, daß die Flachdüse mit ihrer Strömungsöffnung zu den Fließkanälen des Wärmetauschers gerichtet und mit dessen freien Enden direkt verbunden ist, und daß die Flachdüse in die freien Enden des Wärmetauschers in axialer Richtung zur Strömungrichtung der Fließkanäle eingesetzt ist.

Der Vorteil der erfindungsgemäßen Flachdüse ist darin zu sehen, daß mit deren lichtem Innenraum ein Verteilerkanal geschaffen wird, der je nach Längenabmessung der Flachdüse die einzelnen Fließkanäle des Wärmetauschers direkt anströmen kann. Diese Flachdüse kann in die freien Enden der Wärmetauscherplatte eingesetzt und beispielsweise flüssigteitsdicht mit diesen Enden durch Verschweißung, Verklebung usw. verbunden sein. Besonders vorteilhaft hierbei ist, daß die erfindungsgemäße Flachdüse in axialer Richtung zur Strömungsrichtung der Fließkanäle in die freien Enden der Wärmetauscherplatte eingesetzt ist. Auf diese Weise werden Druckverluste bei der Umlenkung, wie sei beispielsweise bei radialem Einsatz der Zuströmöffnung im Übertragungsmedium entstehen, nahezu gänzlich vermieden. Die erfindungsgemäße Flachdüse kann über die gesamte Breite der Wärmetauscherplatte reichen und über deren gesamten Breite in den Endabschnitten eingesetzt sein. Bei einer nur in einer Richtung durchströmten Wärmetauscherplatte kann die erfindungsgemäße Flachdüse sowohl als Zuströmelement für das Übertragungsmedium als auch als Abströmelement verwendet werden. Bei der mittig geteilten Wärmetauscherplatte für Zulauf einerseits und Ablauf andererseits kann die erfindungsgemäße Flachdüse als Zulauf an der Vorlaufseite des Übertragungsmediums und in Form einer zweiten Flachdüse in gleicher Ebene an der Aublaufseite der Wärmetauscherplatte eingesetzt sein, wobei die beiden einander zugekehrten Endbereiche der Flachdüse mit dem mittigen Trennsteg verbunden sein können.

Durch die Art der Verlegung - beispielsweise als Fußdodenheizung - hat es sich als vorteilhaft erwiesen, daß der lichte Innenraum der Flachdüse einerseits von einem ebenen oberen Deckteil und andererseits von einem bauchig nach unten verlaufenden Bodenteil gebildet ist. Diese Gestaltungsweise der erfindungsgemäßen Flachdüse ist insbesondere beim Einsatz als Fußdoenheizungs-Wärmetauscherplatte von Vorteil. Durch das ebene obere Deckteil wird nämlich vermieden, daß an der Auflagerseite Ausbauchungen entsehen, die dann zu berücksichtigen wären, wenn beispielsweise anstelle der erfindungemäßen Flachdüse ein Verteilerrohr an den Querenden der Wärmetauscherplatte eingesetzt würde. Es kommt hier vielmehr wesentlich darauf an - und diese Anforderung wird durch die erfindungsgemäße Flauchdüse erfüllt -, daß die Wärmetauscherplatte zu den Auflagerkräften hin völlig eben gestaltet ist. Die Ausbildung der Flachdüse kann derart erfolgen, daß das Deckteil mit dem Bodenteil und dem rohrförmigen Anschlußstück flüssigkeitsdicht verbunden wird, so daß im Inneren ein Verteilerkanal ausgebildet ist, der mit dem lichten Querschnitt des rohrförmigen Anschlußstückes einerseits und der breiten Strömungsöffnung zu den Fließkanälen andererseits in Verbindung steht. Die Verbindung von Deckteil und Bodenteil kann beispielsweise durch Schweißen, kleben usw. erfolgen. Die erfindungsgemäße Flachdüse kann - wenn sie aus Kunststoff hergestellt ist - aber beispielsweise auch in einem einzigen Fertigungsablauf im Spritzgießverfahren gegossen werden.

Zweckmäßigerweise weist der lichte Innenraum der Flauchdüse von der Strömungsöffnung mittig zum rohrförmigen Anschlußstück verlaufend eine als Strömungsverteiler wirkte Einschnürung auf, welche in der Mitte der Strömungsöffnung ihre geringste lichte Weite aufweisen und bis zur Wurzel des rohrförmigen Anschlußstückes verlaufen kann. Diese Einschnürung bewirkt, daß das Voreilen im zentralen Anströmbereich unterbunden wird, wobei die von der lichten Öffnung des rohrförmigen Anschlußstückes in den Verteilerkanal der Flachdüse verlaufende Strömung des Übertragungsmediums geteilt und in gleicher Strömungsgeschwindigkeit zu den periferen Bereichen der Flachdüse und damit auch zu den periferen Fließkanälen des Wärmetauschers geführt wird. Die Einschnürung kann entsprechend der im System herrschenden Strömungsgeschwindigkeiten eingestellt werden, wobei zu beachten ist, daß auch im Bereich der höchsten Mitte der Einschnürung noch eine Durchtrittsöffnung für das Übertragungsmedium verbleit. Es liegt auch im Rahmen der Erfindung, eine Vielzahl solcher Einschnürungen mit abnehmender Höne im Querschnittsverlauf der Strömungsöffnung der erfindungsgemäß Flachdüse anzuordnen. Dies würde sich insbesondere dann anbieten, wenn eine größere Plattenbreite mit Hilfte der erfindungsgemäßen Flachdüse angeströmt werden soll. Wenn die Einschnürung in der Mitte der Strömungsöffnung ihre geringste lichte Weite aufweist und bis zur Wurzel des rohrförmigen Anschlußstückes verläüft, wird bereits an der Wurzel des rohrförmigen Anschlußstückes die Umleitung des Übertragungsmediums von der mittigen Durchströmdichtung eingeleitet, die sich dann bei zunehmender Einschnürung zu den peripheren Enden des Verteilerkanals in der Flachdüse hin beschleunigt.

In einer weiteren Ausführungsform der erfindungsgemäßen Flachdüse kann das Umleiten des Übertragungsmediums auch dadurch erfolgen, daß in der Strömungsöffnung der Flachdüse Verteilerstege angeordnet sind, deren eines freie Ende im lichten Innenraum der Flachdüse befestigt ist und deren anderes freies Ende über die Strömungsöffnung hinausragt. Vorteilhaft können solche Verteilerstege als Umlenkungen für die Richtung des Strömungsmediums gekrümmt ausgebildet sein. Die Wirkungen solcher Umlenkstege sind die gleichen, wie sie oben bei der Verdickung bzw. bei den mehreren Verdickungen im Strömungsquerschnitt des Verteilerkanals der Flachdüse beschrieben worden sind.

Der Vorteil des gleichmäßigen Anströmens der Fließkanäle durch das Übertragungsmedium läßt sich auch erzielen, wenn bei Verwendung einer Flachdüse mit parallelen Wänden die Geschwindigkeitsvektoren des Übertragungsmediums an der Strömungsöffnung der Flachdüse und die Geschwindigkeitvektoren am Eintritt in die Fließkanäle nicht in einer Ebene liegen bzw. auch dann, wenn diese Geschwindigkeitsvektoren in sich schneidenden Ebenen liegen.

Vorteilhaft ist die Wärmetauscherplatte aus einem Kunststoff - beispielsweise im Extrusionsverfahren - einstückig hergestellt und die erfindungsgemäße Flachdüse aus einem Kunststoff gestaltet, welcher geeignet ist, mit dem Kunststoof der Wärmetauscherplatte eine Schweißverbindung einzugehen. Die Verbindung der Enden der Wärmetauscherplatte mit der erfindungsgemäßen Flachdüse kann derart erfolgen, daß die Trennwände der Fließkanäle im Bereich des Einsatzes der Flachdüse derart geöffnet bzw. zurückgeschnitten werden, daß das obere und das untere Deckteil der Wärmetauscherplatte erhalten bleiben. In die so geschaffene Öffnung wird nunmehr die Flachdüse derart eingesetzt, daß das ebene Deckteil mit der oberen Plattenseite und das untere Bodenteil mit der unteren Plattenseite in Verbindung steht. Sodann werden durch eine geeignete Schweißeinrichtung die aneinanderliegenden Seiten von Wärmetauscherplatte und Flachdüse flüssigkeitsdicht miteinander verschweißt. Dieses Schweißverfahren kann im Wege der Quetschverschweißung erfolgen. Beim Einsatz einer solchen Platte als Wärmetauscher wird dann an das rohrförmige Anschlußstück die Zuführungsleitung für das Übertragungsmedium angeschlossen und- wenn die erfindungsgemäße Flachdüse als Ableitung verwendet werden soll, die entsprechende Ableitung an das gegenüberliegende rohrförmige Anschlußstück angeschlossen. Sodann kann das Übertragungsmedium über die Anschlüsse und die Flachdüse in die Wärmetauscherplatte eingeführt und aus dieser durch den dabei herrschenden Fließdruck, der gleichzusetzen ist mit der Strömungsgeschwindigkeit, wieder abgezogen.

Sodann kann das Übertragungsmedium über die Anschlüsse und die Flachdüse in die Wärmetauscherplatte eingeführt und aus dieser durch den dabei herrschenden Fließdruck, der gleichzusetzen ist mit der Strömungsgeschwindigkeit, wieder abgezogen werden.

In der Zeichnung sind Ausführungsbeispiele der erfindungsgemäßen Flachdüse schematisch dargestellt. Es zeigen:

Fig. 1 die erfindungsgemäße Flachdüse mit bauchigem Bodenteil im Teilschnitt.

Fig. 2 die erfindungsgemäße Flachdüse mit Umlenkstegen im Teilschnitt.

Fig. 3 die erfindungsgemäße Flachdüse eingesetzt in die Wärmetauscherplatte.

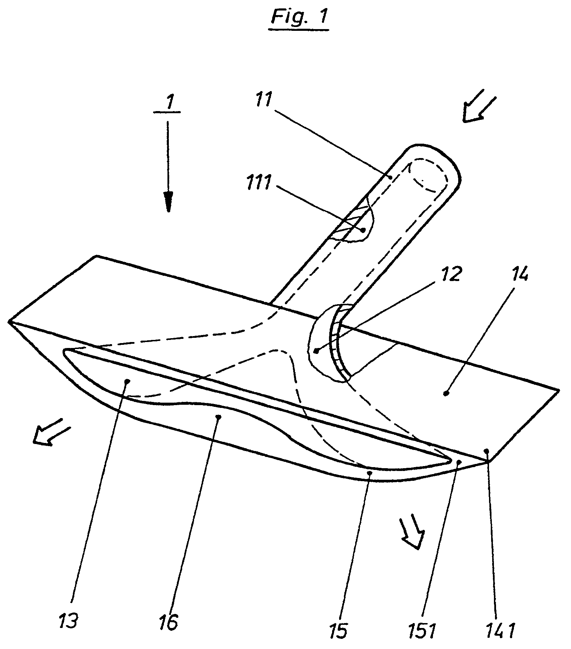

Fig. 1 zeigt die Flachdüse 1 mit dem rohrförmigen Anschlußstück 11 und dem lichten Strömungsquerschnitt 111. Die Flachdüse 1 besitzt einen als Verteilerkanal ausgebildeten lichten Innenraum 12, in den der lichte Querschnitt 111 des Anschlußstückes 11 mündet.

Gegenüber dem rohrförmigen Anschlußstück 11 ist die Strömungsöffnung 13 zu erkennen, welche zu den Fließkanälen 21 des Wärmetauschers 2 gerichtet ist, Die Flachdüse 1 besteht aus einem ebenen Deckteil 14 und einem bauchigen Bodenteil 15, welche in ihren Endbereichen 141, 151 dicht miteinander verbunden sind. Im mittleren Bereich der Strömungsöffnung 13 gegenüber dem lichten Querschnitt 111 des Anschlußstückes 11 angeordnet ist die als Strömungsverteiler wirkende Einschnürung 16 eingezeichnet.

Die Einschnürung 16 kann auch beidseitig in der Wand der Flachdüse 1 angeordnet sein.

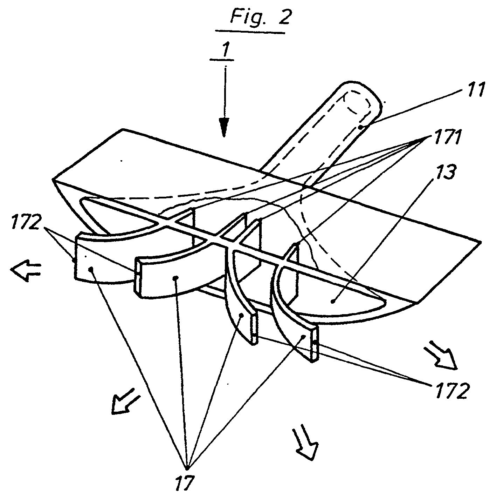

Fig. 2 zeigt die Flachdüse 1 entsprechenden Aufbaus ohne die Einschnürung 16, dafür jedoch mit Verteilerstegen 17. Die Verteilerstege 17 sind derart in der Strömungsöffnung 13 angeordnet, daß eines ihrer freien Enden 171 innerhalb des lichten Innenraumes 12 der Flachdüse 1 befestigt ist, während das andere freie Ende 172 über die Strömungsöffnung 13 hinausragt. In der Abbildung sind die Verteilerstege 17 als Umlenkungen für die Richtung des Strömungsmediums gekrümmt ausgebildet. Auch hier wird neben dem Merkmal der Umlenkung des Strömungsmediums beim Durchfluß eine gewisse Drosselwirkung erreicht. Umlenkung und Drosselwirkung für das Strömungsmedium können - wie gezeigt - durch die Einschnürung 16 genauso erzielt werden wie durch die Verteilerstege 17.

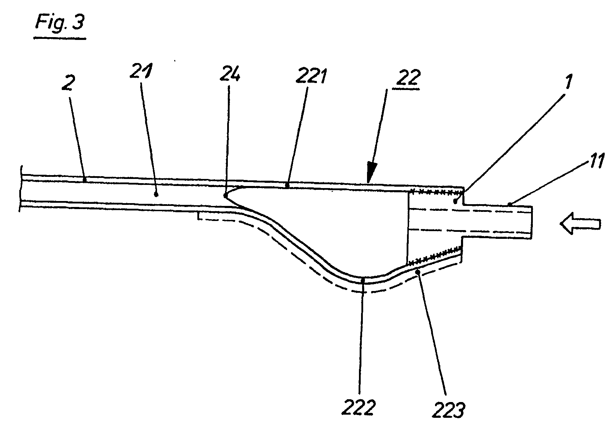

In Fig. 3 ist das Ende eines Wärmetauschers 2 dargestellt. Es ergibt sich hieraus, daß die Querstege bis zum Detail 24 entfernt sind, und daß in den Zwischenraum zwischen der oberen Deckplatte 221 und der unteren Deckplatte 222 die erfindungsgemäße Flachdüse 1 eingesetzt ist. Im Bereich der Abdeckung ist die Flachdüse 1 mit der oberen Deckplatte 221 und der unteren Deckplatte 222 verschweißt, Die untere Deckplatte 222 ist in der gezeigten Darstellung noch zusätzlich bauchig ausgestaltet, um einen zusätzlichen Verteilerkanal zu schaffen. Diese bauchige Ausgestaltung kann beispielsweise im Wege des Tiefziehens oder eines sonstigen thermischen Verformungsvorgangs erfolgen. Wesentlich hierbei ist, daß sich dieser Verformungsvorgang lediglich auf die untere Deckplatte 222 beschränken muß, während die obere Deckplatte 221 eben gehalten bleiben muß.

In der gestrichelten Darstellung 223 ist die untere Deckplatte 222 noch von einer Verstärkung umgeben, die deswegen zweckmäßig sein kann, um Überdruck aus dem Innenraum des Verteilerkanals besser aufzunehmen.

**Patentansprüche**

1. Plattenförmiger Wärmetauscher mit einer Vielzahl von gegeneinander durch längsverlaufende Stege getrennten Fließkanälen für das Übertragungsmedium und an den freien Enden angeordneten Sammelleitungen, in die die einzelnen Fließkanäle münden, wobei in den Sammelleitungen Anschlüsse für die Zufluß- und Abflußleitungen angeordnet sind, dadurch gekennzeichnet, daß die Anschlüsse für die Zuflußleitungen als Flachdüsen (1) mit einem rohrförmigen Anschlußstück (11) ausgebildet sind, welches Anschlußstück (11) mit seinem lichten Querschnitt (111) in den als Verteilerkanal ausgebildeten lichten Innenraum (12) der Flachdüse (1) mündet, welcher lichte Innenraum (12) von einem ebenen oberen Deckteil (14) sowie einem bauchig nach unten verlaufenden Bodenteil (15) gebildet ist, dessen freie Enden (151) nach oben zum Deckteil (14) hingezogen und mit dessen freien Enden (141) dicht verbunden sind, daß der lichte Innenraum der Flachdüse (1) von der Strömungsöffnung (13) mittig zum rohrförmigen Anschlußstück (11) verlaufend eine als Strömungsverteiler wirkende Einschnürung (16) aufweist, daß die Flachdüse (1) mit ihrer Strömungsöffnung (13) zu den Fließkanälen (21) des Wärmetauschers (2) gerichtet und mit dessen freien Enden (22) direkt verbunden ist, und daß die Flachdüse (1) in die freien Enden (22) des Wärmetauschers (2) in axialer Richtung zur Strömungsrichtung der Fließkanäle (21) eingesetzt ist.

2. Plattenförmiger Wärmetauscher nach Anspruch 1, dadurch gekennzeichnet, daß die Einschnürung (16) in der Mitte der Strömungsöffnung (13) ihre geringste lichte Weite aufweist und bis zur Wurzel des rohrförmigen Anschlußstückes (11) verläuft.

3. Plattenförmiger Wärmetauscher mit einer Vielzahl von gegeneinander durch längsverlaufende Stege getrennten Fließkanälen für das Übertragungsmedium und an den freien Enden angeordneten Sammelleitungen, in die die einzelnen Fließkanäle münden, wobei in den Sammelleitungen Anschlüsse für Zufluß- und Abflußleitungen angeordnet sind, dadurch gekennzeichnet, daß die Anschlüsse für die Zuflußleitungen als Flachdüsen (1) mit einem rohrförmigen Anschlußstück (11) ausgebildet sind, welches Anschlußstück (11) mit seinem lichten Querschnitt (111) in den als Verteilerkanal ausgebildeten lichten Innenraum (12) der Flachdüse (1) mündet, welcher lichte Innenraum (12) von einem ebenen oberen Deckteil (14) sowie einem bauchig nach unten verlaufenden Bodenteil (15) gebildet ist, dessen freie Enden (151) nach oben zum Deckteil (14) hingezogen und mit dessen freien Enden (14) dicht verbunden sind, daß in der Strömungsöffnung (13) der Flachdüse (1) Verteilerstege (17) angeordnet sind, deren eines freie Ende (171) im lichten Innenraum (12) der Flachdüse (1) befestigt ist und deren anderes freie Ende (172) über die Strömungsöffnung (13) hinausragt, daß die Flachdüse (1) mit ihrer Strömungsöffnung (13) zu den Fließkanälen (21) des Wärmetauschers (2) gerichtet und mit dessen freien Enden (22) direkt verbunden ist, und daß die Flachdüse (1) in die freien Enden (22) des Wärmetauschers (2) in axialer Richtung zur Strömungsrichtung der Fließkanäle (21) eingesetzt ist.

4. Plattenförmiger Wärmetauscher nach Anspruch 3, dadurch gekennzeichnet, daß die Verteilerstege (17) als Umlenkungen für die Richtung des Strömungsmediums gekrümmt ausgebildet sind.

**Claims**

1. Plate-type heat exchanger featuring a large number of transfer-medium flow channels mutually separated by longitudinally arranged webs and featuring collecting ducts at their open ends into which the individual flow channels enter, with connections for the supply and drainage ducts being arranged in the collecting ducts, characterised by the fact that the connections for the supply ducts are formed as flat nozzles (1) with a tubular shaped connection piece (11) whose clear cross section (111) enters the distribution channel shaped clear interior (12) of the flat nozzle (1), this clear interior (12) being formed by a flat upper cover section (14) as well as a downward facing convex bottom section (15) whose open ends (151) are drawn up towards the cover section (14) and joined, forming a tight seal, to the open ends (141) of the latter, also characterised by the fact that the clear interior of the flat nozzle (1) features a constriction (16), acting as a flow distributor, running from the flow aperture (13) to the centre of the tubular shaped connection piece (11), as well as by the fact that the flat nozzle (1), with its flow aperture (13) pointing towards the flow channels (21) of the heat exchanger (2), is connected directly to the open ends (22) of the latter, and finally by the fact that the flat nozzle (1) is inserted into the open ends (22) of the heat exchanger (2) in an axial direction to the direction of flow of flow channels (21).

2. Plate-type heat exchanger as described in claim 1, characterised by the fact that the constriction (16) exhibits its smallest clear aperture at the centre of the flow aperture (13) and extends to the root of the tubular shaped connection piece (11).

3. Plate-type heat exchanger featuring a large number of transfer-medium flow channels mutually separated by longitudinally arranged webs and featuring collecting ducts at their open ends into which the individual flow channels enter, with connections for supply and drainage ducts being arranged in the collecting ducts, characterised by the fact that the connections for the supply ducts are formed as flat nozzles (1) with a tubular shaped connection piece (11) whose clear cross section (111) enters the distribution channel shaped clear interior (12) of the flat nozzle (1), this clear interior (12) being formed by a flat upper cover section (14) as well as a downward facing convex bottom section (15) whose open ends (151) are drawn up towards the cover section (14) and joined, forming a tight seal, to the open ends (141) of the latter, also characterised by the fact that the flow aperture (13) features distributor webs (17) whose one free end (171) is attached in the clear interior (12) of the flat nozzle (1) and whose other free end (172) projects beyond the flow aperture (13), as well as by the fact that the flat nozzle (1), with its flow aperture (13) pointing towards the flow channels (21) of the heat exchanger (2), is connected directly to the open ends (22) of the latter, and finally by the fact that the flat nozzle (1) is inserted into the open ends (22) of the heat exchanger (2) in an axial direction to the direction of flow of flow channels (21).

4. Plate-type heat exchanger as described in claim 3, characterised by the fact that the distributor webs (17) are curved to divert the direction of transfer flow medium.

## Revendications

1. Echangeur thermique en forme de plaque avec une multiplicité de canaux d'écoulement séparés les uns des autres par des entretoises longitudinales servant au transport de l'agent, avec des collecteurs installés aux extrémités libres dans lesquels tous les canaux d'écoulement débouchent, des raccords pour les conduites d'arrivée et de sortie étant installés dans les collecteurs, caractérisé par le fait que les raccords pour les conduites d'arrivée sont constitués sous la forme de buses plates (1) avec une pièce de raccordement tubulaire (11), cette pièce de raccordement (11) débouchant avec sa section intérieure (111) dans l'intérieur (12) de la buse plate (1) réalisée sous la forme d'un canal de distribution, lequel intérieur (12) est constitué par une pièce recouvrante (14) supérieure plate ainsi que par un fond (15) ventru allant vers le bas et dont les extrémités libres (151) s'étirent vers le haut en direction de la pièce couvrante (14) et étant étroitement reliées aux extrémités libres (141) de cette pièce couvrante, caractérisé par le fait que l'intérieur de la buse plate (1) présente une gorge jouant le rôle d'un distributeur d'écoulement partant de l'ouverture d'écoulement (13), se trouvant au milieu, en direction de la pièce de raccordement tubulaire (11), caractérisé par le fait que la buse plate (1) et son ouverture d'écoulement (13) est dirigée vers les canaux d'écoulement (21) de l'échangeur thermique (2) dont les extrémités libres (22) y sont directement reliées, et caractérisé par le fait que la buse plate (1) est posée dans les extrémités libres (22) de l'échangeur thermique (2) en direction axiale par rapport au sens d'écoulement des canaux (21).

2. Echangeur thermique en forme de plaque selon la revendication 1, caractérisé par le fait que la gorge (16) présente sa largeur intérieure la plus étroite au milieu de l'ouverture d'écoulement et qu'elle va jusqu'à la racine du raccord tubulaire (11).

3. Echangeur thermique en forme de plaque avec une multiplicité de canaux d'écoulement séparés les uns des autres par des entretoises longitudinales servant au transport de l'agent, avec dés collecteurs installés aux extrémités libres dans lesquels tous les cacanaux d'écoulement débouchent, des raccords pour les conduites d'arrivée et de sortie étant installés dans les collecteurs, caractérisé par le fait que les raccords pour les conduites d'arrivée sont constituées sous la forme de buses plates (1) avec une pièce de raccordement tubulaire (11), cette pièce de raccordement (11) débouchant avec sa section intérieure (111) dans l'intérieur (12) de la buse plate (1) réalisée sous la forme d'un canal de distribution, lequel intérieur (12) est constitué par une pièce recouvrante (14) supérieure plate ainsi que par un fond (15) ventru allant vers le bas et dont les extrémités libres (151) s'étirent vers le haut en direction de la pièce couvrante (14) en étant étroitement reliées aux extrémités libres (14) de cette pièce couvrante, caractérisé par le fait que des entretoises de distribution (17) sont disposées dans l'ouverture de d'écoulement (13) de la buse plate (1) et dont une extrémité libre (171) est fixée à l'intérieur (12) de la buse plate (1) et dont l'autre extrémité libre (172) dépasse par l'ouverture d'écoulement (13), caractérisé par le fait que la buse plate (1) avec son ouverture d'écoulement est dirigée vers les canaux d'écoulement (21) de l'échangeur thermique (2) dont les extrémités libres (22) y sont directement reliées (22), et caractérisé par le fait que la buse plate (1) est posée dans les extrémités libres (22) de l'échangeur thermique (2) en direction axiale par rapport au sens d'écoulement des canaux (21).

4. Echangeur thermique en forme de plaque selon la revendication 3, caractérisé par le fait que les entretoises de distribution (17) sont constituées sous la forme de bifurcations coudées pour la direction de l'agent de courant.

Fig. 1

Fig. 2

*Fig. 3*

EP 0 109 097 B2